# EUROPEAN PATENT SPECIFICATION

(11) **EP 1 022 166 B1**
(45) Date of publication and mention of the grant of the patent: **01.10.2008**
(21) Application number: 00100850.7
(22) Date of filing: 17.01.2000
(51) Int. Cl.: B60G 17/005, B60G 17/015, B66F 9/06, B60G 17/052

(54) **Schock-absorbing suspension with variable set, particularly for the rear steering wheels of a three-wheel lift truck**
Einstellbare, stossabsorbierende Aufhängung, insbesondere für die lenkbaren Hinterräder eines Dreiradgabelstaplers
Suspension d'absorption des chocs réglable, notamment pour les roues directrices arrières d'un élévateur industriel à trois roues

(30) Priority: 20.01.1999 IT BO990026
(43) Date of publication of application: 26.07.2000
(73) Proprietor: Montini di Garotti Francesco & C. S.n.c., 48010 Cotignola (RA) (IT)
(72) Inventor: Ravaglia, Paolo, 48020 Glorie di Bagnacavallo RA (IT); Garotti, Francesco, 48010 Cotignola RA (IT)
(74) Representative: Porsia, Attilio

(56) References cited:
- DE-C- 19 634 897
- FR-A- 2 387 810
- US-A- 4 986 387

## Description

The invention relates to counterbalanced fork-lift trucks, particularly those of the three-wheel type, with two powered front wheels and with a pair of rear steering wheels. In lift trucks of the known type, all the wheels are mounted on rigid suspensions and the distance of the ballasted bases of the trucks from the ground is usually fixed. These conditions make the driving of the truck rather uncomfortable, especially in travel over irregular surfaces. Moreover, the fixed distance of the base of a truck of the known type from the ground is such that, if the truck exceeds a particular speed, it may overturn laterally if it receives a strong thrust which is orthogonal to the direction of movement.

In the patent application FR-2 387 810, which is considered the closest prior art, is disclosed a front loader, or similar vehicles, equipped with a hydropneumatic suspension on the rear axle. The hydropneumatic suspension comprises a source of fluid under pressure, a tank, at least one cylinder of suspension for each of the two sides of the vehicle, and at least a valve for regulating the level of the vehicle which is actuated according to the distance between the suspended mass and the non-suspended mass, i.e. the body of the vehicle and the axle of the wheels. The suspension of the vehicle of patent application FR-2 387 810 permits only a manual regulation or a regulation according to the locking conditions of the front axle of the vehicle.

In the patent application DE-196 34 897 is disclosed a suspension for a three-wheels type vehicle; the arrangement of the suspension comprises two oscillating arms which have a pivoting axis on a console which in turn comprises a rotary axis for steering the vehicle. On the ends of the two oscillating arms is provided a spring element that is telescopic with its axis parallel to the steering axis. The spring element can be an air spring. The invention is designed to overcome these and other disadvantages according to the features of claim 1 and with the following idea for a solution. The rear steering wheels of the truck are mounted on a shock-absorbing suspension with variable inclination, controlled by a hydraulic cylinder connected to a hydropneumatic accumulator and to a hydraulic controller with the interposition of solenoid valves controlled by an electronic controller, by means of which it is possible to provide the truck, when it is proceeding at normal speed or very slowly, with a raised inclination, which can be shock-absorbing in the first case but which is rigid in the second case, to ensure stability of manoeuvring of the truck-while it is picking up and discharging loads. However, when the truck exceeds a predetermined speed, the suspension is automatically brought into a lowered inclination, thus reducing the risks of lateral overturning of the truck.

Further characteristics of the invention, and the advantages derived therefrom, will be made clear by the following description of a preferred embodiment of the invention, illustrated purely by way of example, and without restrictive intent, in the figures on the three attached sheets of drawings, in which:
- Fig. 1 is a schematic side view of the truck in the high inclination condition;
- Figs. 2 and 3 are side views of the lower part of the truck, in the condition shown in Figure 1 in the first case, and when running over an obstacle with the rear wheel-provided with shock absorption and in the lower inclination condition, with stabilizing functions, in the second case;
- Fig. 4 shows details of the suspension, viewed through the section line IV-IV of Figure 1;
- Figs. 5 and 6 are two schematic block diagrams of the electrical, electronic and hydraulic circuits which control the operation of the shock-absorbing rear suspension of the truck.

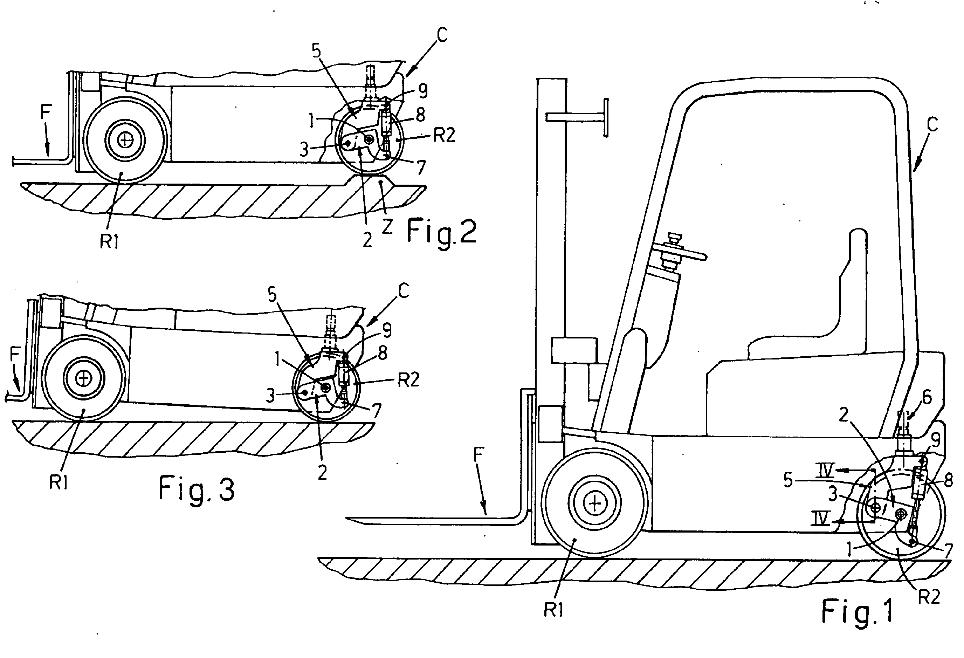

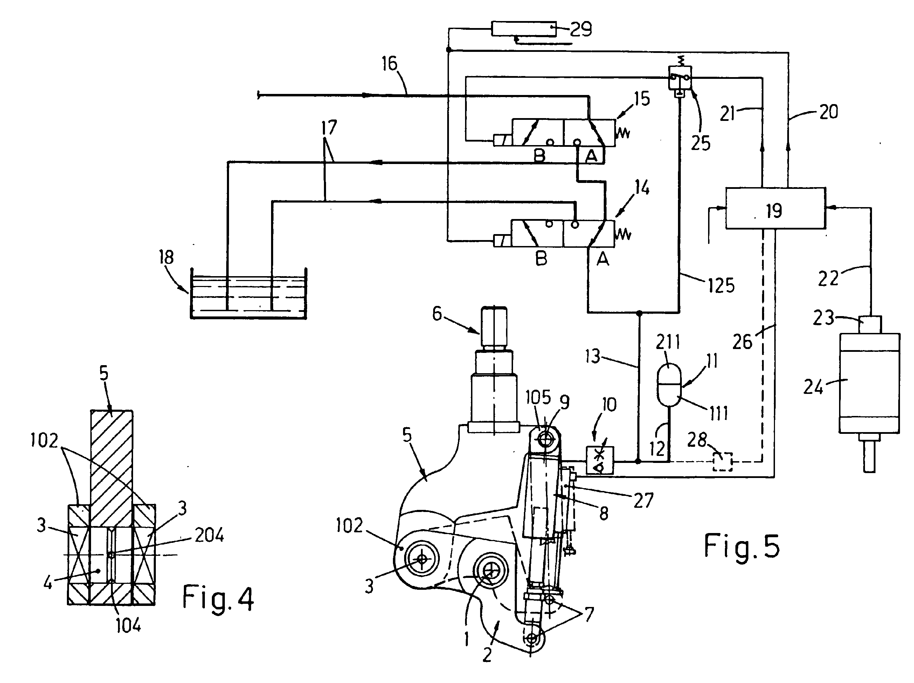

In Figures 1 and 5, the letter C indicates the truck which has a fork F for lifting palletized loads and which is of the three-wheel type, in other words it has a pair of powered front wheels R1 at its sides and has a pair of two adjacent rear wheels R2 which are free-running and used for steering. According to the invention, the wheels R2 are mounted rotatably on the opposite ends of a horizontal axle 1, mounted transversely in the intermediate part of an extension piece 2 which has its forked end 102 (see also Figure 4) pivoted with the interposition of bearings 3 on a pin 4 supported by the lower end of an arm 5 which extends upwards from the extension piece and which, for example, carries an integrally mounted upper pin 6, for fitting in a known steering mechanism which is not illustrated. Figure 4 shows that the pin 4 is, for example, provided in its central part with an annular recess 104 of V-shaped cross section, which is engaged by the head of a dowel bolt 204 screwed into the lower end of the arm 5.

The end of the rod of a cylinder and piston unit 8, of the plunger type, whose base is pivoted at 9 on an upper lateral extension 105 of the arm 5, is pivoted on the end of the extension piece 2 opposite that which is pivoted on the pin 3. Figure 5, in particular, shows that the chamber of the cylinder 8 is filled with a suitable liquid and is connected through the line 12, with the interposition of valve means 10, to the chamber 111, which is also filled with liquid, of a hydropneumatic accumulator 11 which is located on board the truck and is, for example, of the bag type, having its other chamber 211 filled, for example, with nitrogen at a suitable pressure, for example of the order of approximately 35 bars. The valve means 10 comprise, for example; an adjustable throttle and a one-way valve, in parallel with each-other and capable of braking in a suitable way the stroke of the rod of the cylinder 8 in the extension phase only and not in the retraction phase. From the chamber 111 of the accumulator a branch line 13 leads to a three-way solenoid valve 14 with two positions A and B, which in turn is connected to a further three-way solenoid valve 15 with two positions, A and B, to which runs the line 16 from the distributor of the hydraulic controller of the truck, which supplies oil continuously at the correct pressure. The number 17 indicates outlet lines of the solenoid valves 14, 15 which lead to the reservoir 18 of the aforesaid hydraulic controller. The number 19 indicates an electronic controller of the microprocessor type, which controls the solenoid valves 14, 15 with the connections 20 and 21, and which receives through the connection 22 an electrical signal proportional to the speed of travel of the truck C, produced by an encoder 23 operated, for example, by one of the electric motors 24 which move the front wheels R1 of the truck.

The number 25 indicates a pressure-operated switch, which is connected electrically in series with the operating circuit 21 of the solenoid valve 15 and which is connected through the line 125 branched from the aforesaid line 13 running between the cylinder 8 and the accumulator 11.

Finally, the electronic controller 19 receives, through the connection 26, an electrical signal which varies proportionally to the variation of the angular distance between the extension piece 2 and the arm 5 and which is produced, for example, by a potentiometer device 27, for example one of the linear type as shown in Figure 5, having its body fixed to that of the cylinder 8 and having its moving element connected to the rod of this cylinder. It is to be understood that the potentiometer device can otherwise be of the rotary type, located on the joint 3, to measure directly the variations of the relative positions of the arm 5 and the extension piece 2.

The device as described operates in the following way. When the truck moves over irregular surfaces and at a speed of less than 12 km/hr, the hydropneumatic suspension is, for example, in the condition shown in Figure 5 in continuous lines, with the solenoid valves 14, 15 in the positions A. shown in this figure and consequently with the cylinder 8 connected exclusively to the accumulator 11 which absorbs the impacts received by the rear wheels R2. In the normal conditions in which the cylinder 8 acts as a shock-absorber, the controller 19 disregards the signal of the sensor 27, so that the normal height of the truck above the ground is not modified. The controller stores in its memory two values relating to the signal produced by the sensor 27, corresponding to the two operating positions of the suspension, and therefore disregards the short-term deflections of the sensor 27, due to the normal displacements of the suspension, with thresholds of sensitivity which can be adjusted as desired. The controller 19 is, however, sensitive to the displacements of the sensor 27 caused by the different values of the load on the forks of the truck, since the pressure in the chamber of the cylinder 8 varies with the load lifted by the truck. If the rod of the cylinder 8 is extended when the lifted load varies, the sensor 27 sends a proportional signal to the electronic controller 19, making the solenoid valve 14 switch temporarily to the position B, thus connecting the circuit 13 to the outlet 17 to decrease the pressure of the oil in the chamber of the cylinder 8 by a suitable amount, to keep the rear part of the base of the truck at an essentially constant distance from the ground. For the same purpose, if the rod of the cylinder 8 is withdrawn, the sensor 27 signals this condition to the controller 19, which causes the solenoid valve 14 to switch to the position A and causes the solenoid valve 15 to switch to the position B, to connect the chamber of the cylinder 8 temporarily to the supply line 16 of the oil from the hydraulic controller, in order to bring the rod of this cylinder to the nominal position. When the extension piece 2 reaches the angular distance from the arm 5 which corresponds to the normal raised inclination of the suspension, the sensor 27 detects this condition and transmits it to the controller 19 which switches the solenoid valve 15 back to the position A.

As stated previously, the system disregards small variations of position of the rod of the cylinder 8 caused by running over small irregularities Z in the ground, which cause variations of brief duration, as indicated for example in Figure 2.

When the truck proceeds at very low speed, below 4 km/hr, or stops, which may indicate that the truck is in the condition of picking up or discharging a load, then in order to avoid giving the operator a sensation of instability in the phase of movement of the load with the forks F, caused by the shock-absorbing rear suspension, this suspension is made to be switched off and stiffened automatically. The problem is resolved in the following way. The encoder 23 transmits the indication of the low speed to the electronic controller 19 which causes the solenoid valve 15 to switch to the position B until the pressure in the cylinder 8 reaches a value of approximately 120-130 bars, and, when the pressure-operated switch 25 detects this condition, it breaks the electrical circuit 21 and the solenoid valve 15 returns to the position A. In this condition, the pressure-operated switch 25 maintains the desired locking pressure in the cylinder 8. When the truck resumes running at normal speed, the electronic controller 19 causes the delayed switching of the solenoid valve 14 to return the rod of the cylinder 8 to the normal operating position. When the speed of 4 km/hr is exceeded, the truck is lowered by approximately 1 cm, and the suspension is activated and remains in this position, whether or not the truck is loaded.

When the truck exceeds a maximum speed which is preset in the electronic memory of the controller 19, for example 12 km/hr, the said controller, which detects this condition through the encoder 23, causes the solenoid valve 14 to switch to the position B, to discharge the pressure in the cylinder 8, to bring the suspension 2, 5 into the condition shown in Figure 5 in broken lines and as illustrated in Figure 3, in such a way as to reduce the distance between the ground and the rear part of the truck. When the suspension reaches the lowered inclination condition, this condition is detected by the sensor 27, and is detected via this sensor by the controller 19 which switches the solenoid valve 14 back to position A and allows the truck to increase its running speed. A safety microswitch, not illustrated, can be provided to detect the lowered condition of the suspension and to signal it to the controller 19 so that the latter can enable the higher running speed of the truck only if the suspension is actually lowered. Clearly, the lowered inclination of the rear suspension, increases the margins of stability of the truck in response to any lateral overturning.

During deceleration, when the speed falls below 10 km/hr, the truck is elevated again and returns to the preceding position, and below 4 km/hr the suspension is automatically switched off.

As shown in Figure 5, it is possible to mount on the truck a device which detects the transverse inclination of the truck, for example an inclinometer 29 of the on-off type, which is connected in a secondary circuit terminating on the solenoid of the solenoid valve 14 and which is normally open when the transverse inclination of the truck is correct. If the truck is inclined laterally, the inclinometer switches the solenoid valve 14 to position B after a certain value of inclination which may be dangerous to the operator. The suspension oil flows out into the reservoir 18 and the suspension is lowered to its limit, thus increasing stability in the lateral direction with respect to the direction of travel of the truck, with consequent reduction of the danger of overturning. In a stall situation, which may for example occur during the lateral overturning of a truck travelling with the lowered inclination, this solution also prevents the suspension from being reactivated by the controller 19, which, on detecting a reduced speed (decreasing below 12 km/hr), would cause oil to be supplied to the cylinder 8, thus raising the rear of the truck and decreasing its stability.

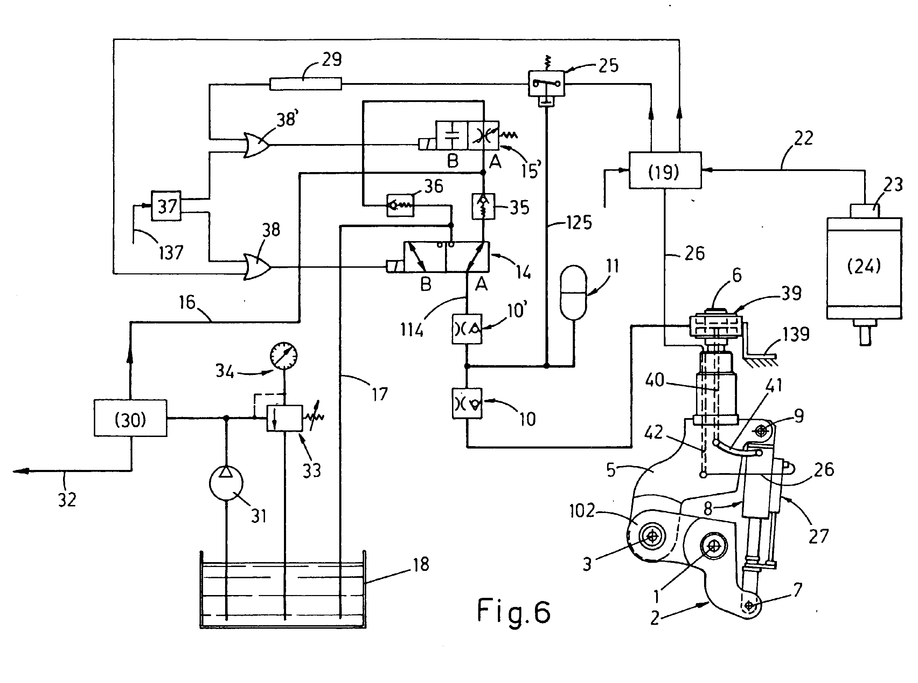

According to the variant design illustrated in Figure 6, the line 16 for sending the working fluid to the suspension control circuit is not connected to the distributor of the truck as in the preceding version, but leads from a flow control valve 30, to which is connected the delivery line of the hydraulic pump 31 which draws fluid from the reservoir 18 and from which valve the line 32 which supplies the distributor leads. Thus the operation of the suspension is not affected by the steering means and by the means of moving the forks of the truck. The number 33 indicates a safety or maximum pressure valve, which has a connection for a pressure gauge 34 and which, if triggered, discharges into the reservoir 18.

The solenoid valve 15 according to the preceding solution has been replaced by a solenoid valve 15' of the on-off type, with a passage of the adjustable-throttle type. The pressurized oil delivery line 16 is now branched directly to the input of the solenoid valve 15', and is connected to one of the passages of the solenoid valve 14 with the interposition of a one-way valve 35 which is normally open in the direction of this solenoid valve 14. The outlet of the solenoid valve 15' is connected to the second passage of the solenoid valve 14, with the interposition of a one-way valve 36 which is normally open in the direction of the solenoid valve 14, this second passage being additionally connected to the discharge line 17. The third passage of the solenoid valve 14 is connected to the same circuit as in the preceding solution, through a set of valves 10' similar to the set 10, with a one-way valve open in the opposite direction to that of the set 10. In this case, the throttles of the valves 10, 10' are of the fixed throttle type. When the solenoid valves 14 and 15' are de-energized, they are in the condition shown in Figure 6, and the suspension remains in its current position because of the lock provided by the one-way valve 35. The pressurized oil supplied from the line 16, through the throttle of the valve 15', passes through the one-way valve 36 and is discharged. The throttle of the active passage A of the solenoid valve 15' keeps the circuit connected to the suspension at the correct pressure and full of fluid, thus preventing recoil in the subsequent change of state of this circuit. If the solenoid valve 15' is energized, for example by the electronic controller 19, it switches to position B and is closed, and therefore the pressurized oil supplied from the line 16 opens the valve 35, passes through the solenoid valve 14, passes through the set of valves 10, 10' and enters the actuator 8 to extend it, consequently raising the shock-absorbing suspension concerned. Owing to the throttle of the valve assembly 10, the change of the state of the suspension is carried out slowly and is hardly perceptible to the person driving the lift truck. However, if the solenoid valve 14 is energized and switches to position B, the pressurized oil passes through the throttle of the valve 15', passes through the valve 36 and is discharged through the line 17 to which the line 114 is now also connected, so that the pressurized oil from the actuator 8 and from the accumulator 11 flows through the throttle of the valve 10' to be discharged, and the suspension is slowly lowered.

Another variant shown in Figure 6 consists in the fact that the inclinometer or inclinometers 29 which detect the transverse inclination of the truck can be connected in a different way, namely in series in the energizing circuit of the solenoid valve 15', so that, if the inclinometers are triggered, the suspension is locked in its current condition.

A further variant shown in Figure 6 provides a selector 37 and corresponding logics 38, 38' in the electrical circuit supplying the solenoid valves 14, 15'. The selector 37 is provided with three operating positions, in one of which the electrical circuit of the solenoid valves is normally connected to the hydraulic controller 19, while in a second or third position the solenoid valves 15' and 14 are supplied selectively by an auxiliary circuit 137 connected to the said selector. If the solenoid valve 15' is energized by the selector 37, the suspension is switched off and remains in the rigid high position, and in this condition the truck cannot exceed 12 km/hr. This condition can be selected when the truck is operating on very smooth surfaces. However, if the solenoid valve 14 is energized by the selector 37, the suspension is switched off and remains in the low rigid position. This condition can be selected in case of emergency, in the presence of anomalies in the operation of the suspension.

Finally, Figure 6 shows that it is possible to eliminate floating lines and cables for connecting the hydraulic circuit to the actuator 8 and for connecting the electrical circuit to the transducer 27 respectively. On the rotation shaft 6 of the arm 5 of the suspension there is mounted a rotary distributor 39 whose outer part is integral with a bracket 139 fixed to the fixed chassis of the truck and whose said outer part is, for example, connected to the valve 10. The inner part of the rotary distributor is connected to channels 40 formed axially in the shaft 6 and opening as a lateral hole in the arm 5 to which a small high-pressure line 41 is connected for the connection to the cylinder 8. In the said shaft 6, there is also provided a longitudinal channel 42 through which can pass the electrical cable 26 which connects the transducer 27, even if it is of the rotary type, to the hydraulic controller 19.

It is to be understood that the description relates to a preferred embodiment of the invention, to which numerous variations and modifications can be made, particularly in respect of construction, these possibly relating, for example, to the use of a pressure transducer 28 branched from the lines 12 or 13, to transmit to the controller 19 an electrical signal which is proportional to the pressure present in the cylinder 8 and which can be used by the said controller, for example, as a comparison signal or as a safety signal in case of failure of the pressure-operated switch 25 and/or of the sensor 27. This and all other modifications which are apparent to those skilled in the art are not excluded from the scope of the invention, as described above, as illustrated and as claimed below. In the claims, the references shown in brackets are provided purely for guidance and do not limit the scope of protection of the claims.

## Claims

1. Shock-absorbing suspension for the rear wheels of a three-wheel lift truck, comprising a pair of powered front wheels (R1), an extension piece (2) whose intermediate part supports the mid-point of the axle (1) on which the twin rear wheels (R2) of the truck are rotatably mounted and whose end, which is preferably forked (102), is pivoted on the lower end of an arm (5) which extends upwards and which carries any suitable means (6) for fitting to a known steering mechanism, this arm being provided in its upper part with an extension (105) on which is pivoted, for example, the end of the body of a cylinder and piston unit (8), preferably of the plunger type, whose rod is pivoted on the free end of the said extension piece, and the inner chamber of the said cylinder being filled with a suitable liquid and connected by means of a suitable line (12) to one of the chambers (111) of a hydropneumatic accumulator (11), of the bag type for example, having the gas chamber (211) at a pressure such that the shocks transmitted by uneven ground to the rear wheels of the truck are absorbed, to prevent these shocks from being fully transmitted to the truck and to the operator driving it, and solenoid valves (14, 15), each of said valves having a first position (A) and a second position (B), according to the combination of said first and second positions, said valves (14, 15) connect said cylinder and piston unit (8) to a line (16) from the distributor of the hydraulic controller of the truck (C), supplying oil continuously at the correct pressure, or to outlet lines (17) leading to a reservoir (18) of said hydraulic controller, **characterized in that** it comprises an electronic controller (19) of the microprocessor type, which controls said solenoid valves (14, 15), and which receives, through a connection (22), an electrical signal proportional to the speed of travel of the truck (C), produced by an encoder (23) operated, for example, by one of the electric motors (24) which move the front wheels (R1) of the truck.

2. Suspension according to Claim 1), in which said electronic controller (19) provides an operative way in which the solenoid valves (14, 15) are both in the positions (A), i.e. the line (16) from the distributor of the hydraulic controller of the truck is closed, and consequently the cylinder (8) is connected exclusively to the accumulator (11) which absorbs the impacts received by the rear wheels (R2), said first operative way being provided for a speed of less than about 12 km/hr, but higher than about 4 km/hr.

3. Suspension according to Claim 1), wherein said electronic controller (19) provides an operative way in which, when the truck (C) proceeds at very low speed, for example below about 4 km/hr, or stops, the first solenoid valve (14) is in the position (A), and the second solenoid valve (15) is in the position (B) connecting the cylinder (8) to the line (16) from the distributor of the hydraulic controller of the truck, which supplies oil until the pressure in the cylinder (8) reaches a value of approximately 120-130 bars, said pressure in the cylinder (8) being detected by a pressure-operated switch (25).

4. Suspension according to Claim 1), wherein said electronic controller (19) provides an operative way in which when the truck (C) exceeds a maximum speed which is preset in the electronic memory of the controller (19), for example about 12 km/hr, said controller detecting this condition through the encoder (23), causes the solenoid valve (14) to switch to the position (B), in order to discharge the pressure in the cylinder (8) through outlet lines-(17) leading to the reservoir (18), and to bring the suspension (2, 5) at a reduced distance between the ground and the rear part of the truck.

5. Suspension according to Claim 1), in which the gas chamber (211) of the hydropneumatic accumulator (11) contains, for example, nitrogen at a pressure of approximately 35 bars.

6. Suspension according to Claim 1), **characterized in that** the pressure chamber of the cylinder (8) is connected to the hydropneumatic accumulator (11) with the interposition of valve means (10) which suitably brake the stroke of the said cylinder in the extension phase only.

7. Suspension according to Claim 1), **characterized in that** the solenoid valve (15), for example of the three-way and two-position (A, B) type, having its single input connected to the oil delivery line (16) running from a hydraulic accumulator and having two outputs which can be connected to a discharge line (17) or to one of the two inputs of a second solenoid valve (14), for example of the three-way and two-position (A, B) type, whose second input is connected to the said discharge line (17) and whose single output is connected to a line (13) branched from the line (12) which connects the hydropneumatic accumulator (11) to the suspension control cylinder (8), the two solenoid valves (14, 15) being controlled by the electronic controller of the processor type (19) which receives an electrical signal from a inclination transducer (27) capable of detecting the angular distance between the extension piece (2) and the arm (5) of the suspension, and which receives another electrical signal from the encoder (23) associated, for example, with one of the motors (24) driving the front wheels of the truck, the whole being designed so that, when the truck travels at normal speed, the cylinder (8) has its rod in a predetermined condition of extension and acts as a shock-absorber, whereas, when the truck exceeds a speed of travel preset in a memory of the said electronic controller (19), the controller automatically operates the said solenoid valves (14, 15) to reduce the pressure in the cylinder (8) of the suspension and to lower the rear end of the truck, in such a way as to reduce the possibility of lateral overturning of the truck, provision preferably being made to ensure that it is only after this lowering phase that the truck can exceed the said speed of travel stored in the controller.

8. Suspension according to Claim 4), **characterized in that** the electronic controller (19) is designed to disregard the signal from the transducer (27) of the inclination of the suspension when the hydraulic cylinder has to act as a shock-absorber and the signal from the said transducer has variations of brief duration, the thresholds of sensitivity of the said controller being made adjustable for this purpose if necessary.

9. Suspension according to the preceding claims, **characterized in that** the electronic controller (19) is designed to detect the persistent variations of the signal produced by the transducer (27) of the inclination of the suspension, due to the various picking up or discharging conditions of the forks of the truck, provision being made in this case for the controller to switch the solenoid valves (14, 15) to introduce pressure into the chamber of the hydraulic cylinder (8) or discharge it therefrom, in order to keep the base of the truck in a position essentially parallel to the ground.

10. Suspension according to the preceding claims, **characterized in that** the electrical circuit with a pressure-operated switch (25), whose fluid circuit is connected to a line (125) branched from the line (12) which connects the accumulator (11) to the hydraulic cylinder (8) of the suspension, is connected in series with the electrical circuit (21) which connects the electronic controller (19) to the solenoid valve (15) whose input is connected to the pressurized oil delivery line (16), means being provided in the said electronic controller to ensure that, when the truck (C) travels at very low speed or stops, the controller switches the said solenoid valve (15) to increase the pressure in the said cylinder to such a value as to bring it into the position of maximum extension of the rod, with the stiffening of the suspension, which is particularly useful for preventing oscillations of the truck during the phases of picking up and discharging a load, this pressure being maintained by the said pressure-operated switch which returns the said solenoid valve to the resting position (A).

11. Suspension according to the preceding claims, in which the pressure-operated switch (25) is set to a pressure of approximately 120-130 bars.

12. Suspension according to the preceding claims, **characterized in that** a pressure transducer (28), which emits an electrical signal proportional to the pressure detected and transmits it to the electronic controller (19) which can use it as a safety or comparison signal, can be branched from the lines connected to the pressure chamber of the cylinder (8) which controls the inclination of the suspension.

13. Suspension according to the preceding claims, **characterized in that** it comprises a microswitch or other suitable safety means for detecting the withdrawn condition of the cylinder (8) which controls the inclination of the suspension, this microswitch being connected to the electronic controller (19) to ensure that the truck is enabled to increase its speed of travel only if the said microswitch has been switched by the actual lowering of the suspension.

14. Suspension according to the preceding claims, **characterized in that** it comprises a means for detecting the transverse inclination of the truck, for example an inclinometer (29), which after a certain value of lateral inclination of the truck acts on the solenoid valve (14) which discharges and keeps discharged the cylinder (8) of the suspension, in order to reduce the danger of the lateral overturning of the truck.

15. Suspension according to the preceding claims, in which valve means (10') which suitably brake the stroke of the rod of the said cylinder, including the contraction stroke, are provided in the line which connects the final three-way valve (14) to the hydropneumatic accumulator (11) and the hydraulic cylinder (8) controlling the suspension.

16. Suspension according to Claim 7), **characterized in that** there is provided, in place of the first three-way and three-position solenoid valve (15), an on-off solenoid valve having a passage of the adjustable throttle type, whose two orifices are connected to the two inputs of the second solenoid valve (14) with the interposition of one-way valves (35, 36) which open only in the direction of the said second solenoid valve, the input of the said first solenoid valve being connected to the line (16) which supplies the pressurized oil from the hydraulic controller, while the discharge line (17) which flows to the reservoir (18) of the controller is connected to the normally inactive input of the said second solenoid valve (14).

17. Suspension according to the preceding claims, **characterized in that** the inclinometer or inclinometers (29) which detect the transverse inclination of the truck, if triggered, break the electrical circuit for energizing the first solenoid valve (15-15'), to lock the suspension in its current condition.

18. Suspension according to the preceding claims, **characterized in that** it comprises a three-position selector (37) and logics (38, 38') in the electrical circuit for energizing the solenoid valves (14, 15, 15'), in order to enable the said solenoid valves to be energized selectively, independently of the commands arriving from the electronic controller (19), to keep the suspension in the fully raised or fully lowered position, as necessary.

19. Suspension according to the preceding claims, **characterized in that** it comprises a rotary distributor (39) whose fixed outer part is connected to the valve means controlling the hydraulic circuit and whose inner part is keyed on the rotation shaft (6) of the suspension, which has an axial channel (40) to which is connected a flexible line (41) connected to the hydraulic cylinder (8), the said shaft also having a further longitudinal channel (42) through which the electrical cable (26) connecting the inclination transducer (27) to the electronic controller (19) passes.

## Patentansprüche

1. Stoßaufnehmende Aufhängung für die Hinterräder eines dreirädrigen Gabelstaplers, umfassend ein Paar angetriebener Vorderräder (R1), ein Verlängerungsstück (2), dessen Zwischenteil den Mittenpunkt der Achse (1) stützt, auf dem die hinteren Zwillingsräder (R2) des Staplers drehbar befestigt sind und dessen Ende, das vorzugsweise gegabelt ist (102), am unteren Ende eines Arms (5) gelagert ist, welcher sich hinauf erstreckt und jedes geeignete Mittel (6) zum Befestigen an einem bekannten Lenkmechanismus trägt, wobei dieser Arm in seinem oberen Teil mit einer Verlängerung (105) versehen ist, auf der beispielsweise das Ende des Körpers einer Zylinder- und Kolbeneinheit (8), vorzugsweise des Typs Tauchkolben, gelagert ist, dessen Stange am freien Ende des Verlängerungsstücks gelagert ist, und wobei die Innenkammer des Zylinders mit einer geeigneten Flüssigkeit gefüllt und mittels einer geeigneten Leitung (12) mit einer der Kammern (111) eines hydropneumatischen Akkumulators (11), beispielsweise des Typs Sack, verbunden ist, wobei die Gaskammer (211) unter einem solchen Druck steht, dass die durch unebenen Erdboden auf die Hinterräder des Staplers ausgeübten Stöße absorbiert werden, um zu verhindern, dass diese Stöße gänzlich auf den Stapler und dessen Bediener übertragen werden, und mit Solenoidventilen (14, 15), von denen jedes eine erste Position (A) und eine zweite Position (B) gemäß der Kombination der ersten und zweiten Position hat; wobei die Ventile (14, 15) besagte Zylinder- und Kolbeneinheit (8) mit einer Leitung (16) aus dem Verteiler des hydraulischen Reglers des Staplers (C) verbinden, wobei kontinuierlich Öl mit dem korrektem Druck geliefert wird, oder mit Auslassleitungen (17), die zu einem Reservoir (18) des hydraulischen Reglers führen, **dadurch gekennzeichnet, dass** ein elektronischer Regler (19) vom Typ Mikroprozessor vorhanden ist, welcher die Solenoidventile (14, 15) steuert, und der über eine Verbindung (22) ein elektrisches Signal empfängt, das zur Fahrgeschwindigkeit des Staplers (C) proportional ist, und das durch einen Kodierer (23) erzeugt wird, der beispielsweise durch einen der Elektromotoren (24) angetrieben wird, welche die Vorderräder (R1) des Staplers drehen.

2. Aufhängung nach Patentanspruch 1, wobei der elektronische Regler (19) eine Betriebsweise zur Verfügung stellt, in der die Solenoidventile (14, 15) beide in den Positionen (A) sind, d.h. die Leitung (16) aus dem Verteiler des hydraulischen Reglers des Staplers geschlossen ist, und infolgedessen der Zylinder (8) ausschließlich mit dem Akkumulator (11) verbunden ist, der die von den Hinterrädern (R2) empfangenen Stöße absorbiert, wobei die besagte erste Betriebsweise für eine Geschwindigkeit unter etwa 12 km/h aber höher als etwa 4 km/h eingerichtet ist.

3. Aufhängung nach Patentanspruch 1, wobei der elektronische Regler (19) eine Betriebsweise zur Verfügung stellt, in der, wenn der Stapler (C) sich mit sehr niedriger Geschwindigkeit fortbewegt, beispielsweise mit unter etwa 4 km/h, oder stoppt, sich das erste Solenoidventil (14) in der Positon (A) und das zweite Solenoidventil (15) in der Position (B) befindet, wodurch der Zylinder (8) mit der Leitung (16) aus dem Verteiler des Hydraulikreglers des Staplers verbunden ist, der Öl liefert, bis der Druck im Zylinder (8) einen Wert von ungefähr 120-130 Bar erreicht, wobei dieser Druck im Zylinder (8) durch einen druckbetätigten Schalter (25) detektiert wird.

4. Aufhängung nach Patentanspruch 1, wobei der elektronische Regler (19) eine Betriebsweise zur Verfügung stellt, in der, sobald der Stapler (C) eine Reglers (19) voreingestellt ist, beispielsweise etwa 12 km/h, der Regler beim Detektieren dieser Bedingung durch den Kodierer (23) das Solenoidventil (14) veranlasst auf die Position (B) zu schalten, um den Druck im Zylinder (8) durch die zum Reservoir (18) führenden Auslassleitungen (17) abzulassen und die Aufhängung (2, 5) in einen verringerten Abstand zwischen Erdboden und dem hinteren Teil des Staplers zu bringen.

5. Aufhängung nach Patentanspruch 1, wobei die Gaskammer (211) des hydropneumatischen Akkumulators (11), beispielsweise Stickstoff bei einem Druck von angenähert 35 Bar enthält.

6. Aufhängung nach Patentanspruch 1, **dadurch gekennzeichnet, dass** die Druckkammer des Zylinders (8) mit dem hydropneumatischen Akkumulator (11) mit Zwischensetzung von Ventileinrichtungen (10) verbunden ist, die in geeigneter Weise den Kolbenweg im Zylinder nur in der Ausdehnungsphase bremsen.

7. Aufhängung nach Patentanspruch 1, **dadurch gekennzeichnet, dass** das Solenoidventil (15), beispielsweise vom Typ Dreiwege und Zweipositionen (A, B), seinen einzigen Eingang an die Ölausgabeleitung (16) angeschlossen hat, die aus einem hydraulischen Akkumulator kommt und zwei Ausgänge aufweist, die an eine Abgabeleitung (17) oder an einen der zwei Eingänge eines zweiten Solenoidventils (14), beispielsweise des Typs Dreiwege und Zweipositionen (A,B), angeschlossen werden kann, dessen zweiter Eingang mit der besagten Ausgabeleitung (17) verbunden ist, und dessen einziger Ausgang mit einer Leitung (13) verbunden ist, die von der Leitung (12) abzweigt, welche den hydropneumatischen Akkumulator (11) mit dem Aufhängungs-Steuerungszylinder (8) verbindet, wobei die zwei Solenoidventile (14, 15) durch der elektronische Regler des Typs Prozessor (19) gesteuert werden, die ein elektrisches Signal aus einem Neigungsmesswandler (27) empfängt, der imstande ist den Winkelabstand zwischen dem Verlängerungsstück (2) und dem Arm (5) der Aufhängung zu detektieren, und der ein weiteres elektrisches Signal aus dem verknüpften Kodierer (23) empfängt, beispielsweise wenn einer der Motoren (24) die Vorderräder des Staplers antreibt, und das Ganze so gestaltet ist, dass wenn der Stapler mit normaler Geschwindigkeit fährt, der Zylinder (8) seine Stange in einem vorbestimmten Längungszustand hat und als ein Stoßdämpfer wirkt, hingegen, wenn der Stapler eine in einem Speicher des elektronischen Reglers (19) voreingestellte Fahrgeschwindigkeit überschreitet, der Regler automatisch die Solenoidventile (14, 15) betätigt, um den Druck im Zylinder (8) der Aufhängung herabzusetzen und das hintere Ende des Staplers in derartiger Weise absenkt, dass die Möglichkeit eines seitlichen Überschlags des Staplers reduziert wird, wobei die Vorkehrung vorzugsweise so getroffen ist, dass gewährleistet wird, dass nur nach dieser Absenkphase des Staplers die in dem Regler abgespeicherte Fahrgeschwindigkeit überschreiten kann.

8. Aufhängung nach Patentanspruch 4, **dadurch gekennzeichnet, dass** der elektronische Regler (19) so konstruiert ist, dass das Signal aus dem Messwandler (27) für die Neigung der Aufhängung nicht beachtet wird, wenn der Hydraulikzylinder als ein Stoßdämpfer wirken muss, und das Signal aus dem Messwandler Schwankungswerte kurzer Dauer aufweist, wobei die Empfindlichkeitsschwellwerte des Reglers nötigenfalls für diesen Zweck einstellbar gemacht sind.

9. Aufhängung nach den vorangehenden Patentansprüchen, **dadurch gekennzeichnet, dass** der elektronische Regler (19) so konstruiert ist, dass sie die ständigen Schwankungen des vom Messwandler (27) erzeugten Signals der Neigung der Aufhängung detektiert, die ihre Ursache in den verschiedenen Bedingungen des Auffangens oder Entlastens der Gabeln des Staplers haben, wobei in diesem Fall für die den Regler vorgesehen ist, dass er die Solenoidventile (14, 15) schaltet, um Druck in die Kammer des Hydraulikzylinders (8) einzuführen oder ihn davon zu entlasten, damit die Basis des Staplers in einer Position im wesentlichen parallel zum Erdboden gehalten wird.

10. Aufhängung nach den vorangehenden Patentansprüchen, **dadurch gekennzeichnet, dass** der elektrische Schaltkreis mit einem druckbetätigten Schalter (25), dessen Fluidkreis mit einer Leitung (125) verbunden ist, die von der Leitung (12) abzweigt, welche den Akkumulator (11) mit dem Hydraulikzylinder (8) der Aufhängung verbindet, in Reihe mit dem elektrischen Schaltkreis (21) verbunden ist, der den Regler (19) mit dem Solenoidventil (15) verbindet, dessen Eingang mit der Druck-Öl-Abgabeleitung (16) verbunden ist, wobei in dem elektronischen Regler Mittel vorhanden sind, um zu gewährleisten, dass wenn der Stapler (C) mit sehr niedriger Geschwindigkeit fährt oder stoppt, der Regler das Solenoidventil (15) schaltet, damit der Druck in dem Zylinder auf einen solchen Betrag erhöht wird, dass dieser in die Position maximaler Auslenkung des Stabes gebracht wird, mit Versteifen der Aufhängung, was besonders nützlich für ein Verhüten von Schwingungen des Staplers während der Phasen des Aufnehmens und Abladens einer Last ist, wobei dieser Druck durch den druckbetätigten Schalter aufrechterhalten wird, der das Solenoidventil in die Ruhestellung (A) rückführt.

11. Aufhängung nach den vorangehenden Patentansprüchen, wobei der druckbetätigte Schalter (25) auf einen Druck von ungefähr 120-130 Bar gesetzt ist.

12. Aufhängung nach den vorangehenden Patentansprüchen, **dadurch gekennzeichnet, dass** ein Druck-Messwandler (28), der ein dem detektierten Druck proportionales elektrische Signal abgibt und es zum elektronischen Regler (19) sendet, der es als ein Sicherheits- oder Vergleichssignal benutzen kann, von den Leitungen abgezweigt werden kann, die mit der Druckkammer des Zylinders (8) verbunden sind, der die Neigung der Aufhängung steuert.

13. Aufhängung nach den vorangehenden Patentansprüchen, **dadurch gekennzeichnet, dass** sie einen Mikroschalter oder andere geeignete Sicherheitsvorrichtungen zum Detektieren des Rückzugszustands des Zylinders (8), der die Neigung der Aufhängung steuert, enthält, wobei dieser Mikroschalter mit dem elektronischen Regler (19) verbunden ist, damit gewährleistet wird, dass der Stapler imstande ist, seine Fahrgeschwindigkeit nur dann zu erhöhen, falls der Mikroschalter durch die aktuelle Absenkung der Aufhängung umgeschaltet worden ist.

14. Aufhängung nach den vorhergehenden Patentansprüchen, **dadurch gekennzeichnet, dass** sie eine Einrichtung zum Detektieren der Querneigung des Staplers enthält, beispielsweise einen Neigungsmesser (29), der nach einem bestimmten Betrag seitlicher Neigung des Staplers auf das Solenoidventil (14) einwirkt, das den Zylinder (8) der Aufhängung entlädt und entladen beibehält, damit die Gefahr eines seitlichen Umkippens des Staplers verringert wird.

15. Aufhängung nach den vorhergehenden Patentansprüchen, wobei Ventilvorrichtungen (10'), die in geeigneter Weise die Auslenkung der Stange des Zylinders einschließlich des Kontraktionsweges abbremsen, in der Leitung vorgesehen sind, die das End-Dreiwegeventil (14) mit dem hydropneumatischen Akkumulator (11) und dem hydraulischen Zylinder (8) verbinden, womit die Aufhängung gesteuert wird.

16. Aufhängung nach Patentanspruch 7, **dadurch gekennzeichnet, dass** anstelle des ersten Dreiwege-und Dreipositions-Solenoidventils (15) ein Ein/Aus-Solenoidventil vorgesehen ist, das einen Durchlass des Typs einstellbare Drossel hat, dessen zwei Öffnungen mit den zwei Eingängen des zweiten Solenoidventils (14) mit Zwischensetzung von Einwegventilen (35, 36) verbunden sind, die nur in der Richtung des zweiten Solenoidventils öffnen, wobei der Eingang des ersten Solenoidventils mit der Leitung (16) verbunden ist, die das Druck-Öl aus dem hydraulischen Regler liefert, während die Entladeleitung (17), die zum Reservoir (18) des Reglers fließen lässt, mit dem normalerweise inaktiven Eingang des zweiten Solenoidventils (14) verbunden ist.

17. Aufhängung nach den vorhergehenden Patentansprüchen, **dadurch gekennzeichnet, dass** der oder die Neigungsmesser (29), welche die Querneigung des Staplers detektiert/detektieren, falls angesprochen, den elektrischen Kreis zum Speisen des ersten Solenoidventils (15-15') unterbrechen, um die Aufhängung in ihrem gegenwärtigen Zustand zu verriegeln.

18. Aufhängung nach den vorhergehenden Patentansprüchen, **dadurch gekennzeichnet, dass** sie einen Dreipositionswähler (37) und Logikschaltungen (38, 38') im elektrischen Kreis zum Speisen der Solenoidventile (14, 15, 15') aufweist, um die Solenoidventile selektiv aktivieren zu können, unabhängig von aus dem elektronischen Regler (19) ankommenden Befehlen, um die Aufhängung in der Position ganz hochgehoben oder ganz abgesenkt beizubehalten.

19. Aufhängung nach den vorhergehenden Patentansprüchen, **dadurch gekennzeichnet, dass** sie einen Drehverteiler (39) aufweist, dessen festgehaltener Außenteil mit den Ventilvorrichtungen verbunden ist, die den hydraulischen Kreis steuern und dessen Innenteil am Drehschaft (6) der Aufhängung angeschraubt ist, der einen achsialen Kanal (40) besitzt, mit dem eine flexible Leitung (41) verbunden ist, die mit dem Hydraulikzylinder (8) verbunden ist, wobei dieser Schaft auch einen weiteren Längskanal (42) hat, durch den das elektrische Kabel (26) läuft, das den Neigungs-Messwandler (27) mit der elektronischen Steuereinrichtung (19) verbindet.

## Revendications

1. Suspension amortie pour les roues arrière d'un chariot élévateur à trois roues, comprenant une paire de roues avant motrices (R1), une pièce formant prolongement (2) dont la partie intermédiaire supporte le point milieu de l'essieu (1) sur lequel les roues arrière jumelées (R2) du chariot sont montées rotatives, et dont l'extrémité, qui est de préférence en forme de fourche (102) s'articule sur l'extrémité inférieure d'un bras (5) qui s'étend vers le haut et qui porte des moyens appropriés (6) pour s'accoupler à un mécanisme de direction connu, ce bras étant muni, dans sa partie supérieure, d'un prolongement (105) sur lequel s'articule, par exemple l'extrémité du corps d'une unité à cylindre et piston (8), de préférence du type à plongeur, dont la tige s'articule sur l'extrémité libre de ladite pièce formant prolongement, et la chambre intérieure dudit cylindre étant remplie d'un liquide approprié et reliée par une conduite appropriée (12) à l'une des chambres (111) d'un accumulateur hydropneumatique (11), par exemple du type à poche, lequel a sa chambre à gaz (211) à une pression telle que les chocs transmis par le sol irrégulier aux roues arrière du chariot soient absorbés, afin d'éviter que ces chocs ne soient entièrement transmis au chariot et à l'opérateur qui le conduit, et des électrovalves (14, 15), chacune de ces valves ayant une première position (A) et une seconde position (B) et, selon la combinaison desdites première et seconde positions, lesdites valves (14, 15) relient ladite unité à cylindre et piston (8) à une conduite partant du distributeur du dispositif de commande hydraulique du chariot (C), en fournissant l'huile en permanence à la bonne pression, ou à des conduites de sortie (17) qui mènent à un réservoir (18) dudit dispositif de commande hydraulique, **caractérisée en ce qu'**elle comprend un dispositif de commande électronique (19) du type à microprocesseur qui commande lesdites électrovalves (14, 15) et qui reçoit, par une connexion (22), un signal électrique proportionnel à la vitesse de circulation du chariot (C), produit par un encodeur (23) actionné, par exemple, par l'un des moteurs électriques (24) qui entraînent les roues avant (R1) du chariot.

2. Suspension selon la revendication 1, dans laquelle ledit dispositif de commande électronique (19) présente un mode opératoire dans lequel les électrovalves (14, 15) sont toutes deux dans les positions (A), c'est-à-dire que la conduite (16) partant du distributeur du dispositif de commande hydraulique du chariot est fermée et que, par conséquent, le cylindre (8) est relié exclusivement à l'accumulateur (11) qui absorbe les chocs reçus par les roues arrière (R2), ledit premier mode opératoire étant prévu pour une vitesse de moins d'environ 12 km/h mais supérieure à environ 4 km/h.

3. Suspension selon la revendication 1, dans laquelle ledit dispositif de commande électronique (19) présente un mode opératoire dans lequel, lorsque le chariot (C) avance à une vitesse très basse, par exemple inférieure à environ 4 km/h, ou s'arrête, la première électrovalve (14) est dans la position (A) et la seconde électrovalve (15) est dans la position (B) en reliant ainsi le cylindre (8) à la conduite (16) partant du distributeur du dispositif de commande hydraulique du chariot, qui fournit de l'huile jusqu'à ce que la pression régnant dans le cylindre (8) atteigne une valeur d'environ 120-130 bars, ladite pression régnant dans le cylindre (8) étant détectée par un interrupteur commandé par la pression (25).

4. Suspension selon la revendication 1, dans laquelle ledit dispositif de commande électronique (19) présente un mode opératoire dans lequel, lorsque le chariot (C) excède une vitesse maximum qui est préétablie dans la mémoire électronique du dispositif de commande (19), par exemple d'environ 12 km/h, ledit dispositif de commande, en détectant cet état par l'intermédiaire de l'encodeur (23), amène l'électrovalve (14) à passer à la position (B), afin de décharger la pression régnant dans le cylindre (8) par des conduites de sortie (17) qui mènent au réservoir (18), et afin de régler la suspension (2, 5) sur une distance réduite entre le sol et la partie arrière du chariot.

5. Suspension selon la revendication 1, dans laquelle la chambre à gaz (211) de l'accumulateur hydropneumatique (11) contient, par exemple, de l'azote à une pression d'environ 35 bars.

6. Suspension selon la revendication 1, **caractérisée en ce que** la chambre de pression du cylindre (8) est reliée à l'accumulateur hydropneumatique (11) avec interposition de moyens du type valve (10) qui freinent convenablement la course dudit cylindre uniquement dans la phase d'extension.

7. Suspension selon la revendication 1, **caractérisée en ce que** l'électrovalve (15) par exemple du type à trois voies et deux positions (A, B), qui a son entrée unique reliée à la conduite d'amenée d'huile (16) partant d'un accumulateur hydraulique, et qui possède deux sorties qui peuvent être reliées à une conduite de décharge (17) ou à l'une des deux entrées d'une seconde électrovalve (14), par exemple du type à trois voies et deux positions (A, B), dont la seconde entrée est reliée à ladite conduite de décharge (17) et dont la sortie unique est reliée à une conduite (13) dérivée de la conduite (12) qui relie l'accumulateur hydropneumatique (11) à un cylindre (8) de commande de la suspension, les deux électrovalve (14, 15) étant commandées par le dispositif de commande électronique du type à processeur (19) qui reçoit un signal électrique provenant d'un transducteur d'inclinaison (27) capable de détecter la distance angulaire entre la pièce formant prolongement (2) et le bras (5) de la suspension, et qui reçoit un autre signal électrique provenant de l'encodeur (23) associé, par exemple, à l'un des moteurs (24) qui entraînent les roues avant du chariot, le tout étant conçu de telle manière que, lorsque le chariot circule à la vitesse normale, le cylindre (8) a sa tige dans un état prédéterminé d'extension et se comporte comme un amortisseur, tandis que, lorsque le chariot excède une vitesse de circulation préétablie dans une mémoire dudit dispositif de commande électronique (19), le dispositif de commande actionne automatiquement les dites électrovalves (14, 15) pour réduire la pression régnant dans le cylindre (8) de la suspension et pour abaisser l'extrémité arrière du chariot d'une manière propre à réduire le risque de renversement latéral du chariot, et des moyens étant de préférence prévus pour garantir que ce n'est qu'après cette phase d'abaissement que le chariot pourra excéder ladite vitesse de circulation mémorisée dans le dispositif de commande.

8. Suspension selon la revendication 4, **caractérisée en ce que** le dispositif de commande électronique (19) est conçu pour ignorer le signal provenant du transducteur (27) de l'inclinaison de la suspension lorsque le cylindre hydraulique doit se comporter comme un amortisseur et que le signal dudit transducteur présente des variations de brève durée, les seuils de sensibilité dudit dispositif de commande étant rendus réglables pour cela si nécessaire.

9. Suspension selon les revendication précédentes, **caractérisée en ce que** le dispositif de commande électronique (19) est conçu pour détecter les variations persistantes du signal produit par le transducteur (27) de l'inclinaison de la suspension résultant des différents états de prise en charge ou de déchargement des fourches du chariot, des moyens étant prévus dans ce cas pour que le dispositif de commande commute les électrovalves (14, 15) pour introduire de la pression dans la chambre du cylindre hydraulique (8) ou pour l'en décharger, afin de maintenir la base du chariot dans une position sensiblement parallèle au sol.

10. Suspension selon les revendications précédentes, **caractérisée en ce que** le circuit électrique équipé d'un interrupteur commandé par la pression (25), dont le circuit de fluide est relié à une conduite (125) dérivée de la conduite (12) qui relie l'accumulateur (11) au cylindre hydraulique (8) de la suspension, est connecté en série avec le circuit électrique (21) qui relie le dispositif de commande électronique (19) à l'électrovalve (15) dont l'entrée est reliée à la conduite d'amenée d'huile sous pression (16), des moyens étant prévus dans ledit dispositif de commande électronique pour garantir que, lorsque le chariot (C) circule à très basse vitesse ou s'arrête, le dispositif de commande commute ladite électrovalve (15) pour accroître la pression régnant dans le dit cylindre jusqu'à une valeur propre à l'amener à la position d'extension maximum de la tige, en entraînant ainsi le raidissement de la suspension, ce qui est particulièrement utile pour empêcher les oscillations du chariot pendant les phases de prise en charge et de déchargement d'une charge, cette pression étant maintenue par ledit interrupteur commandé par la pression qui ramène ladite électrovalve à la position de repos (A).

11. Suspension selon les revendications précédentes, dans laquelle l'interrupteur commandé par la pression (25) est réglé sur une pression d'environ 120-130 bars.

12. Suspension selon les revendications précédentes, **caractérisée en ce qu'**un transducteur de pression (28) qui émet un signal électrique proportionnel à la pression détectée et le transmet au dispositif de commande électronique (19), lequel peut l'utiliser comme signal de sécurité ou de comparaison, peut être dérivé des conduites reliées à la chambre de pression du cylindre (8) qui commande l'inclinaison de la suspension.

13. Suspension selon les revendications précédentes, **caractérisée en ce qu'**elle comprend un micro-interrupteur, ou autre moyen de sécurité approprié destiné à détecter l'état rétracté du cylindre (8) qui commande l'inclinaison de la suspension, ce micro-interrupteur étant relié au dispositif de commande électronique (19) pour garantir que le chariot ne sera autorisé à augmenter sa vitesse de circulation que si ledit micro-interrupteur a été commuté par l'abaissement réel de la suspension.

14. Suspension selon les revendication précédentes, **caractérisée en ce qu'**elle comprend un moyen pour détecter l'inclinaison transversale du chariot, par exemple un inclinomètre (29), qui, après une certaine valeur d'inclinaison latérale du chariot, agit sur l'électrovalve (14) qui décharge le cylindre (8) de la suspension, et le maintient déchargé, afin de réduire le risque de renversement latéral du chariot.

15. Suspension selon les revendications précédentes, dans lequel des moyens formant valves (10') qui freinent convenablement la course de la tige de dudit cylindre, y compris la course de contraction, sont prévus dans la conduite qui relie la valve à trois voies finale (14) à l'accumulateur hydropneumatique (11) et au cylindre hydraulique (8) qui commande la suspension.

16. Suspension selon la revendication 7, **caractérisée en ce qu'**il est prévu, en remplacement de la première électrovalve à trois voies et trois positions (15), une électrovalve tout ou rien ayant un passage du type à étranglement réglable, dont deux orifices sont reliés aux deux entrées de la seconde électrovalve (14) avec interposition clapets anti-retour (35, 36) qui s'ouvrent seulement en direction de ladite seconde électrovalve, l'entrée de ladite première électrovalve étant reliée à la conduite (16) qui fournit l'huile sous pression en provenance du dispositif de commande hydraulique, tandis que la conduite de décharge (17), qui va au réservoir (18) du dispositif de commande est reliée à l'entrée normalement inactive de ladite seconde électrovalve (14).

17. Suspension selon les revendications précédentes, **caractérisée en ce que** l'inclinomètre ou les inclinomètres (29) qui détectent l'inclinaison transversale du chariot, s'il est déclenché ou s'ils sont déclenchés, interrompt ou interrompent le circuit électrique prévu pour exciter la première électrovalve (15-15') afin de verrouiller la suspension dans son état actuel.

18. Suspension selon les revendications précédentes, **caractérisée en ce qu'**elle comprend un sélecteur à trois positions (37) et des logiques (38, 38') intercalés dans le circuit électrique prévu pour exciter les électrovalves (14, 15, 15') afin de permettre auxdites électrovalves d'être excitées sélectivement, indépendamment des ordres arrivant du dispositif de commande électronique (19), pour maintenir la suspension dans sa position entièrement soulevée ou entièrement abaissée, selon la nécessité.

19. Suspension selon les revendication précédentes, **caractérisée en ce qu'**elle comprend un distributeur rotatif (39) dont la partie extérieure fixe est relié aux moyens formant valve qui commandent le circuit hydraulique, et dont la partie intérieure est clavetée sur l'arbre rotatif (6) de la suspension, lequel présente un canal axial (40) auquel est reliée une conduite flexible (41) reliée au cylindre hydraulique (8), ledit arbre ayant aussi un autre canal longitudinal (42) par lequel passe le câble électrique (26) qui relie le transducteur d'inclinaison (27) au dispositif de commande électronique (19).
